Europäisches Patentamt

European Patent Office

Office européen des brevets

(19)

(11) Veröffentlichungsnummer: 0 183 641
A2

# (12) EUROPÄISCHE PATENTANMELDUNG

(21) Anmeldenummer: 85730157.6

(22) Anmeldetag: 29.11.85

(51) Int. Cl.⁴: F 16 G 13/14
F 16 G 15/02

(30) Priorität: 29.11.84 DE 3444008
07.05.85 DE 3516800

(43) Veröffentlichungstag der Anmeldung:
04.06.86 Patentblatt 86/23

(84) Benannte Vertragsstaaten:
AT DE GB SE

(71) Anmelder: RUD-Kettenfabrik Rieger & Dietz GmbH u.
Co.
Friedensinsel
D-7080 Aalen 1(DE)

(72) Erfinder: Rieger, Werner, Dipl.-Ing.
Haus Häselbach
D-7080 Aalen-Unterkochen(DE)

(72) Erfinder: Dalferth, Hans, Ing. grad.
Eifelstrasse 21
D-7080 Aalen-Wasseralfingen(DE)

(72) Erfinder: Bauer, Hans
Am Schimmelberg 53
D-7080 Aalen-Wasseralfingen(DE)

(74) Vertreter: Böning, Manfred, Dr. Ing. et al,
Patentanwälte Dipl.-Ing. Dieter Jander Dr. Ing. Manfred
Böning Kurfürstendamm 66
D-1000 Berlin 15(DE)

(54) Kettenschloss.

(57) Bei einem Kettenschloß mit lösbar miteinander verbundenen Schloßteilen (1, 2) sollen in das Schloß eingehängte
ovale Kettenglieder (8) vor einem Verklanken geschützt
werden. Um dieses Ziel zu erreichen, ist das Kettenschloß
mit Ansätzen und/oder Stütz- und Verriegelungselementen
(6) versehen, die federnde Vorsprünge (9, 10) aufweisen,
welche den Gliedrundungen der in das Schloß eingehängten
Kettenglieder (8) zugewandt sind und vorzugsweise aus
Gummi oder Kunststoff bestehen, d.h. elastische Puffer
bilden.

Fig. 8

Kettenschloß

Die Erfindung betrifft ein Kettenschloß für Gliederketten mit zwei lösbar miteinander verbundenen, im
wesentlichen U-förmigen Schloßhälften, die jeweils
einen Innenschenkel und einen Außenschenkel aufweisen, wobei in der Schließstellung des Schlosses, in
der die Innen- und Außenschenkel durch Halteelemente
miteinander verbunden sind und die einander zugewandten Seiten der Innenschenkel sich über Ansätze
und/oder ein Stütz- und Verriegelungselement für die
Schloßhälften abstützen, in die lichten Innenräume
des Schlosses die Gliedrundungen bildenden Enden von
ovalen Kettengliedern eingehängt sind, deren gerade
Längsschenkel durch Anschläge und diese miteinander
verbindende Sperrflächen an einer Verlagerung in die
lichten Innenräume gehindert werden.

Bei bekannten Kettenschlössern ist der für die einzuhängenden Kettenglieder jeweils zur Verfügung stehende lichte Innenraum regelmäßig so gestaltet, daß bei
einem Kettenstau die Längsschenkel der Kettenglieder
u.U. schon bei leichter Schrägstellung der Kettenglieder in die lichten Innenräume rutschen können,
um sich hier beim erneuten Strecken der Kette zu verklanken, d.h. festzuklemmen. Die dabei auftretenden
Kräfte sind nicht nur außerordentlich groß, sondern
sie führen darüber hinaus zu einer Beanspruchung des
Kettenschlosses, die sich grundsätzlich von dessen
normaler Beanspruchung bei gestreckter Lage im Kettenstrang unterscheidet und die zur vorzeitigen Schloßzerstörung führen kann.

- 2 -

Um der Verklankungsgefahr zu begegnen, wurde in der deutschen Gebrauchsmusterschrift 81 25 895 ein Kettenschloß der eingangs beschriebenen Art vorgeschlagen, bei dem ein starres Stütz- und Verriegelungselement für die Schloßhälften als Antiverklankungselement Verwendung findet. Die bekannte Konstruktion vermag insofern nicht voll zu befriedigen, als bei ihr einerseits zur Gewährleistung einer hinreichenden Verklankungssicherheit unter Inkaufnahme eines erhöhten Fertigungsaufwandes vergleichsweise enge Toleranzen eingehalten werden müssen und weil diese Toleranzen andererseits bei längerem Einsatz des Schlosses infolge unvermeidbarer Verschleißerscheinungen verloren gehen und folglich mit Verklankungen gerechnet werden muß.

Der Erfindung liegt die Aufgabe zugrunde, ein Kettenschloß der in Betracht gezogenen Art zu schaffen, das auch bei längerem Einsatz und nach Verschleißangriff Verklankungserscheinungen noch wirksam verhindert. Diese Aufgabe wird erfindungsgemäß dadurch gelöst, daß die Anschläge und die Sperrflächen von sich gegenüberliegenden federnden Vorsprüngen der Ansätze und/oder des Stütz- und Verriegelungselementes gebildet werden.

Der Einsatz von federnden Vorsprüngen, welche die zur Verhinderung von Verklankungen dienenden Anschläge und Sperrflächen bilden, bietet entscheidende Vorteile. Er gestattet unter anderem das Spiel zwischen den Sperrflächen und den Bugen der in das

- 3 -

Kettenschloß eingehängten Kettenglieder klein zu halten bzw. auf Null zu reduzieren. Die Sperrflächen können sogar mit einer gewissen Vorspannung gegen die Gliedrundungen drücken. Die federnde Ausbildung der Vorsprünge wirkt sich aber nicht nur im Neuzustand von Kettenschloß und Kettengliedern, d.h. bei praktisch vorliegender Spielfreiheit aus, sondern auch dann, wenn ein gewisser Verschleiß eingetreten ist. Durch die federnde Ausbildung der Anschläge und der Sperrflächen wird die oben angedeutete Gefahr, daß es mit zunehmendem Verschleiß von Kettenschloß und Kettengliedern zu Verklankungen kommt, kompensiert. Dies deshalb, weil aufgrund der Nachgiebigkeit der Vorsprünge ein verklemmtes Kettenglied sich wieder aus der Verklankungslage herausbewegen kann. In diesem Zusammenhang ist zu beachten, daß die Kräfte, die das Glied in eine Verklankungslage zu überführen suchen, regelmäßig klein sind, d.h. daß auch ein federndes Antiverklankungselement normalerweise ohne Schwierigkeiten seine Aufgabe zu erfüllen vermag. Demgegenüber sind die Kräfte, die das Kettenglied aus der Verklankungslage zu entfernen suchen, erheblich. Kommt es also bei einem federnden Antiverklankungselement wider Erwarten zu einer Verklankungslage, so läßt sich diese aufgrund der Nachgiebigkeit des Antiverklankungselementes unter der Einwirkung der vom verklankten Kettenglied auf die federnden Vorsprünge ausgeübten Kräfte spontan wieder aufheben.

Weitere Einzelheiten und Merkmale der Erfindung ergeben sich aus den Unteransprüchen und der nachste-

- 4 -

henden Beschreibung mehrerer in der beigefügten Zeichnung dargestellter bevorzugter Ausführungsbeispiele. Es zeigen

Figur 1 die Draufsicht auf ein Kettenschloß;

Figur 2 einen Schnitt längs der Linie II-II in Fig. 1;

Figur 3 die Seitenansicht eines ersten Stütz- und Verriegelungselementes;

Figur 4 die Draufsicht auf das Stütz- und Verriegelungselement gemäß Fig. 3;

Figur 5 die Seitenansicht eines zweiten Stütz- und Verriegelungselementes;

Figur 6 die Draufsicht auf das Stütz- und Verriegelungselement gemäß Fig. 5;

Figur 7 die Draufsicht auf ein weiteres Kettenschloß;

Figur 8 einen Schnitt längs der Linie VIII-VIII in Fig. 7;

Figur 9 die Draufsicht auf das Stütz- und Verriegelungselement des Kettenschlosses gemäß Fig. 7 und 8;

Figur 10 einen Schnitt längs der Linie X-X in Fig. 9;

Figur 11 einen Schnitt längs der Linie XI-XI in Fig. 10;

Figur 12 einen Schnitt längs der Linie XII-XII in Fig. 10;

Figur 13 eine Einzelheit einer Verankerungsnut;

Figur 14 eine Verklankungssituation bei einem nicht verklankungssicheren Kettenschloß;

Figur 15 die Begrenzung einer translatorischen Bewegung eines in ein Kettenschloß eingehängten Kettengliedes durch einen Anschlag und

Figur 16 die Begrenzung einer Schwenkbewegung eines in ein Kettenschloß eingehängten Kettengliedes durch einen Anschlag.

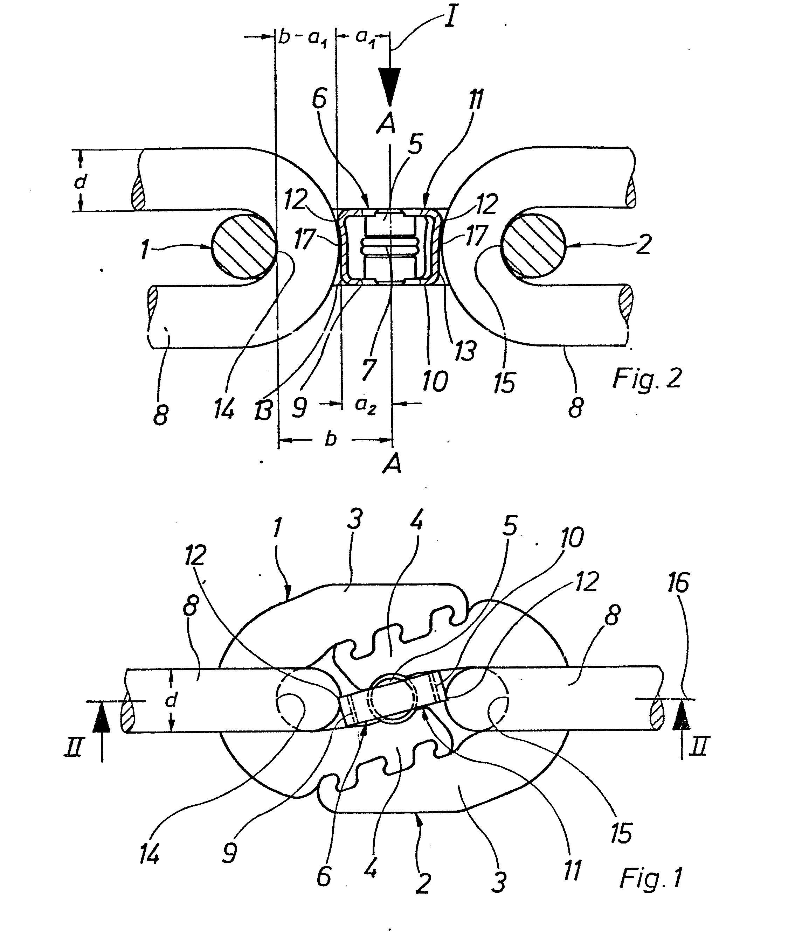

In den Figuren 1 und 2 sind mit 1 und 2 allgemein zwei lösbar miteinander verbundene Schloßhälften eines Kettenschlosses bezeichnet, die jeweils einen Außenschenkel 3 und einen Innenschenkel 4 aufweisen, die über Haltezähne miteinander verbunden sind. Zur Verriegelung der Schloßhälften 1 und 2 in der Schließlage und zum Abstützen der einander zugewandten Seiten der Innenschenkel 4 dient ein einen Bolzen 5 aufweisendes Stütz- und Verriegelungselement 6, das am Bolzenumfang mit Rastfedern 7 versehen ist.

In die Schloßhälften 1 und 2 sind die Enden zweier Kettenstränge bildende Kettenglieder 8 eingehängt. Es versteht sich, daß anstelle eines der Kettenglieder beispielsweise auch ein Anschlußbügel eines irgendwie gearteten Bauteiles treten kann. Um zu verhindern,
daß die Kettenglieder 8 sich bei einem Kettenstau
schräg stellen können und bei erneuter Zugbelastung
auf die Kette in der Schräglage verklanken, ist das
Stütz- und Verriegelungselement 6 mit Vorsprüngen
9 und 10 versehen, die von den Seitenwänden eines
allgemein mit 11 bezeichneten federnden Rahmens gebildet werden und jeweils Anschläge 12 und 13 formen.
Wie aus Figur 2 erkennbar ist, ist die Differenz
$b-a_1$ aus dem Abstand b zwischen den Scheiteln 14
bzw. 15 der Innenrundungen der Schloßhälften 1 und
2 und der senkrecht zur Schloßebene 16 durch die
Schloßmitte verlaufenden Achse A-A und dem Abstand $a_1$
zwischen dem Anschlag 12 und dieser Achse geringfügig kleiner als der Durchmesser d der in das Kettenschloß eingehängten Kettenglieder 8. Figur 2 zeigt,
daß die Anschläge 12 und 13 durch eine Sperrfläche
17 verbunden sind, die eine an die Form der Rundungen
der eingehängten Kettenglieder 8 angepaßte Kontur
hat, d.h. die im Querschnitt leicht konkav ausgebildet
ist. Der konkaven Form der Sperrfläche 17 ist eine
leichte Konizität überlagert, so daß der Rahmen 11 in
Richtung des Pfeiles I in das Kettenschloß einführbar
ist.

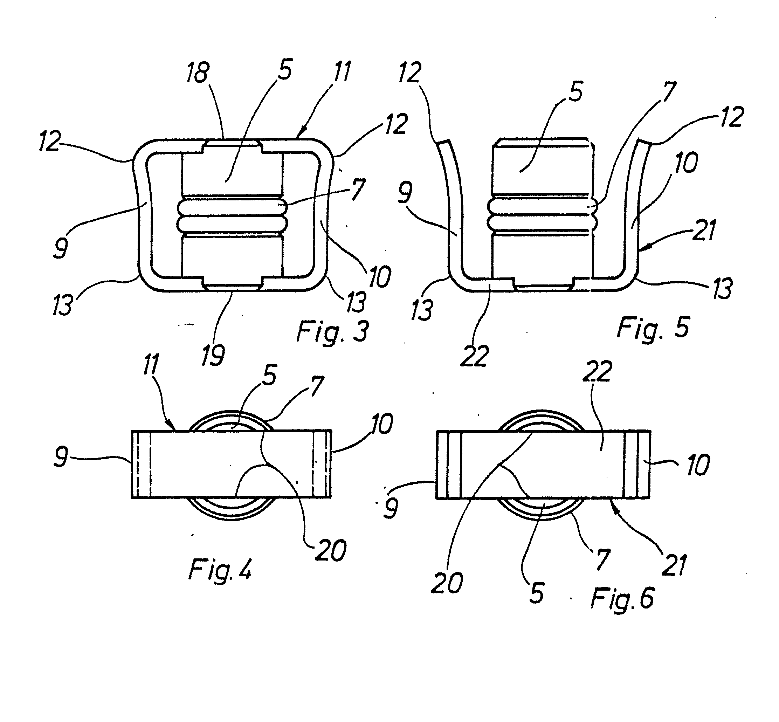

In den Figuren 3 und 4 ist das Stütz- und Verriegelungselement 6 in vergrößertem Maßstab dargestellt.
Man erkennt, daß der Rahmen 11 im Bereich der Stirnflächen 18,19 des den Hauptteil des Stütz- und Verriegelungselementes 6 bildenden Bolzens 5 in Nuten 20
gehalten wird. Der Rahmen 11 besteht aus einem gebogenen Federstahlstreifen, der seinen die Vorsprünge 9 und 10 bildenden Seitenwänden eine ausreichende Elastizität verleiht.

Will man die Elastizität bzw. Federwirkung der Vorsprünge noch erhöhen, so bietet sich eine Lösung
der in den Figuren 5 und 6 dargestellten Art an.
In diesem Falle werden die Vorsprünge 9 und 10 von
Teilen federnder Schenkel eines im wesentlichen
U-förmigen Bügels 21 gebildet. Das Joch 22 ist hier
auch in einer Nut 20 geführt und zusätzlich durch
Schweißen mit dem Bolzen 5 des Stütz- und Verriegelungselementes verbunden.

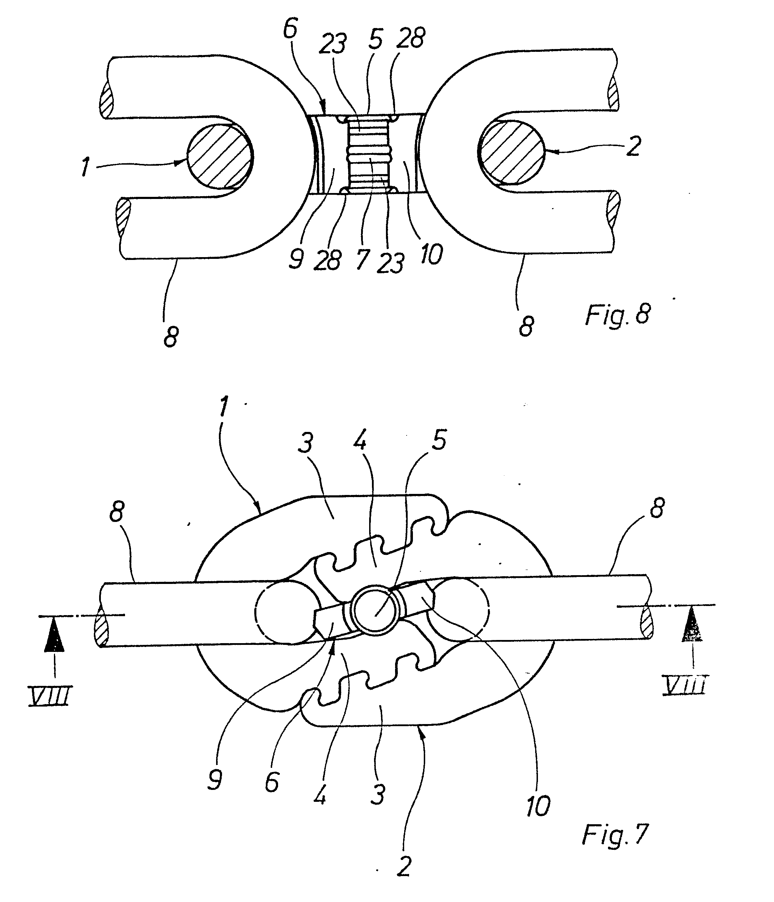

In den Figuren 7 und 8 sind mit 1 und 2 wiederum
zwei lösbar über Haltezähne miteinander verbundene
Schloßhälften eines Kettenschlosses mit jeweils einem Außenschenkel 3 und einem Innenschenkel 4 bezeichnet. Zur Verriegelung der Schloßhälften 1 und
2 in der Schließlage und zum Abstützen der einander
zugewandten Seiten der Innenschenkel 4 dient auch
hier ein einen Bolzen 5 aufweisendes Stütz- und Verriegelungselement 6, das am Bolzenumfang mit Rastfedern 7 versehen ist.

In die Schloßhälften 1 und 2 sind wiederum die Enden
zweier Kettenstränge bildende Kettenglieder 8 eingehängt. In diesem Fall ist der Bolzen 5 mit Vorsprüngen 9 und 10 versehen, die als elastische Antiverklankungsstege aus Gummi oder Kunststoff ausge-

- 8 -

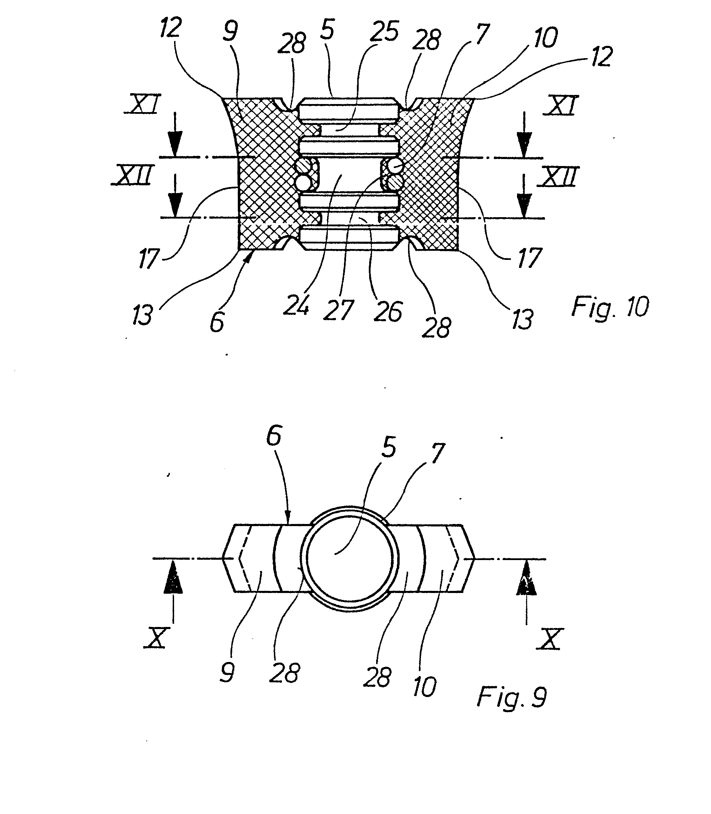

bildet und haftend zumindest mit Teilen des Umfanges des metallischen Bolzens 5 verbunden sind. Die Haftverbindung erzielt man, indem man den Bolzen 5 zusammen mit den Rastfedern 7 in eine Form einführt, in der er anschließend mit sich erhärtendem Gummi oder Kunststoff umgossen wird. Als besonders vorteilhaft hat sich die Verwendung eines Polyurethan-Elastomers als Gießharz erwiesen. Die Shore-Härte A der Vorsprünge 9,10 sollte in der Größenordnung von 40 - 90 liegen. Um eine ausreichende Festigkeit der Verbindung zwischen dem Bolzen 5 und den elastischen Vorsprüngen 9,10 zu gewährleisten, sind letztere mit Auslegern 23 versehen, die den Bolzen 5 polypenarmartig umfassen und im dargestellten Ausführungsbeispiel Verbindungsbrücken bilden, wie dies im einzelnen in den Figuren 10 bis 12 dargestellt ist.

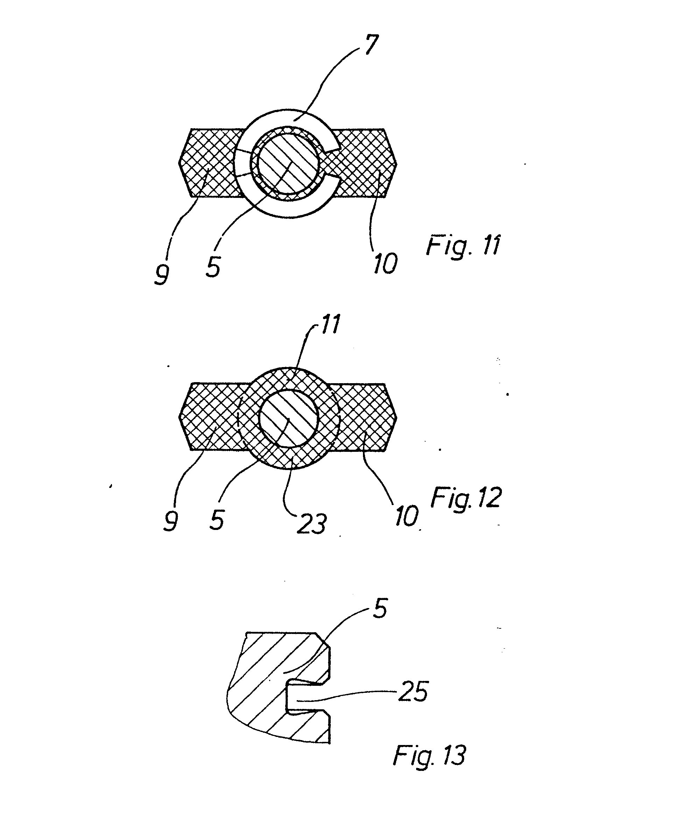

Die Figuren 10, 11 und 12 zeigen, daß der Bolzen 5 mit einer Haltenut 24 für die Rastfedern 7 und mit zwei ringförmigen Verankerungsnuten 25 und 26 für die Ausleger 23 versehen ist. Die Verankerungsnuten 24 und 25 sind vorzugsweise hinterschnitten (vgl. Figur 13 ) und mit dem zur Herstellung der Vorsprünge 9 und 10 verwendeten Material ausgefüllt, so daß den Bolzen 5 umschließende bzw. die Vorsprünge 9 und 10 zusätzlich miteinander verbindende obere und untere Brücken entstehen, die ebenfalls zur sicheren Verankerung der Vorsprünge 9,10 am Bolzen 5 beitragen.

Das zur Herstellung der Vorsprünge 9,10 verwendete
Material füllt auch den Grund der Haltenut 24 unter
Bildung einer Brücke 27 aus, wobei sich ein Verhältnis des Durchmessers der Rastfedern 7 zur Dicke der
den Haltenutboden bedeckenden Materialschicht von
4 : 1 als besonders vorteilhaft erwiesen hat. Sie bewirkt eine Steigerung der Federkraft um das Zwei- bis
Vierfache. 28 sind im Bereich der Enden des Bolzens 5
in den Vorsprüngen 9,10 angebrachte Entlastungskerben,
welche Freiraum für einen zum Einschlagen des Bolzens 5
in die Verriegelungsposition verwendeten Hammer schaffen.

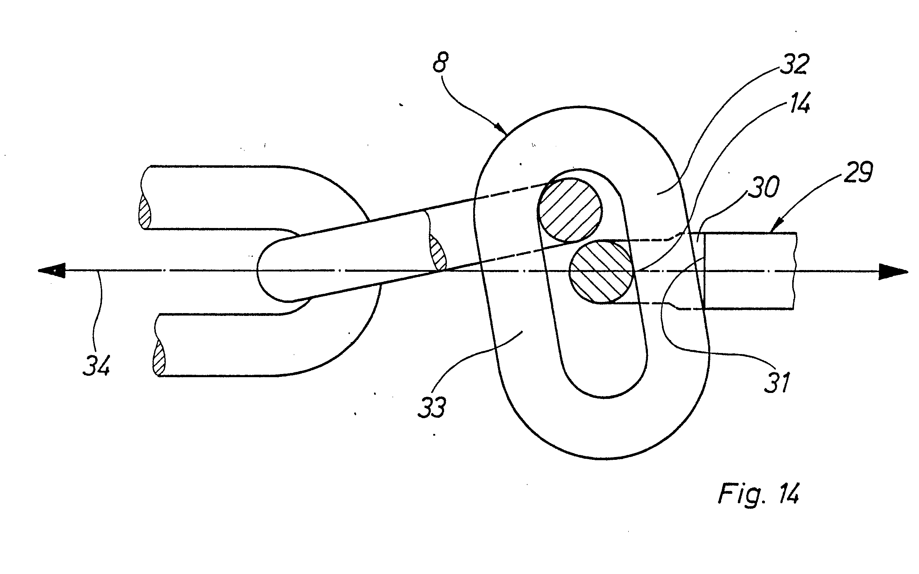

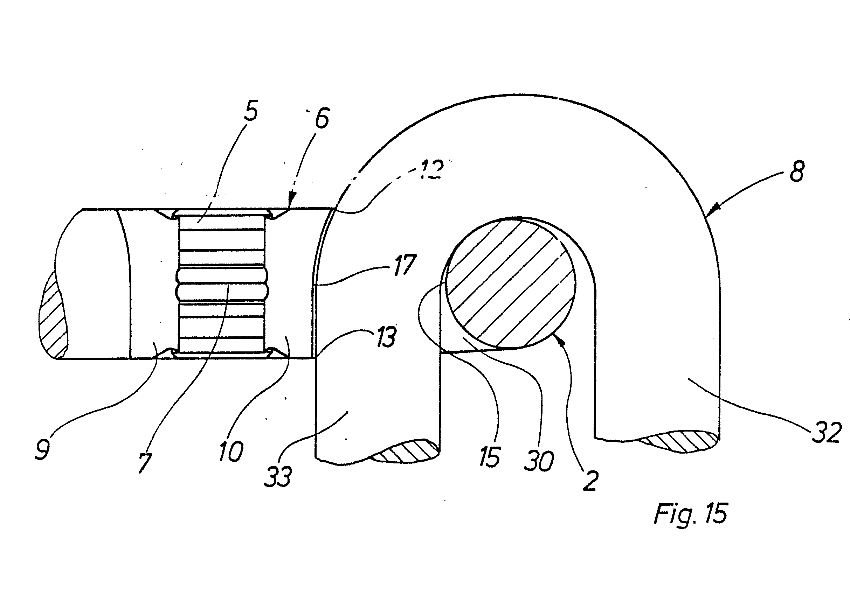

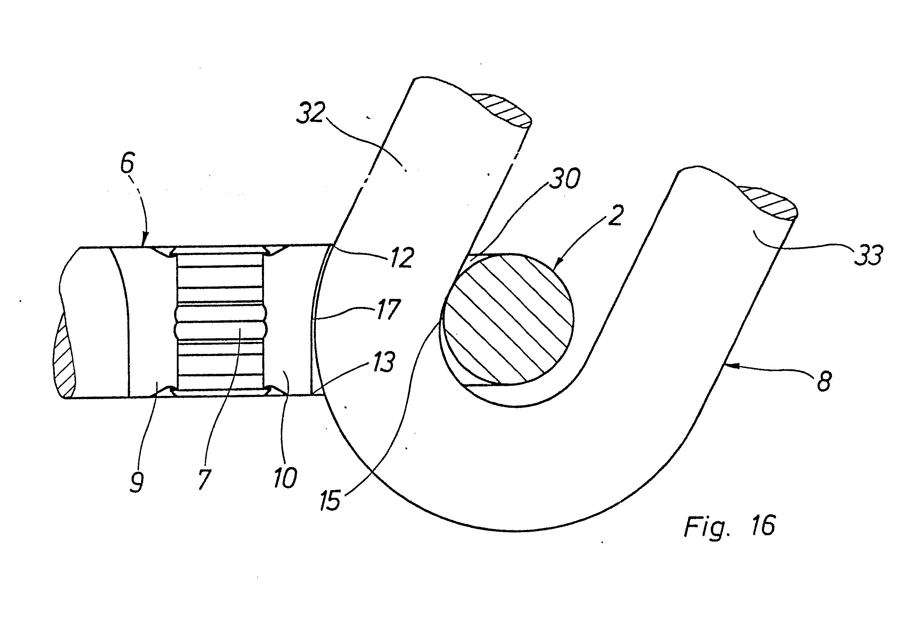

Zum besseren Verständnis der Wirkungsweise des beschriebenen Kettenschlosses ist in Figur 14 eine Verklankungssituation dargestellt, wie sie bei bekannten Kettenschlössern auftreten kann. In Figur 14 ist 29 eine im
wesentlichen U-förmige Schloßhälfte eines Kettenschlosses, dessen lichter Innenraum 30 an der dem Scheitel
14 abgewandten Seite durch eine gerade Fläche 31 begrenzt ist. Eine solche oder ähnliche Ausbildung des
lichten Innenraumes 30 macht es möglich, daß einer der
geraden Schenkel 32 und 33 des Kettengliedes 8 in den
lichten Innenraum 30 rutscht und sich hier bei erneuter
Streckung des Kettenstranges unter der Einwirkung einer
Zugkraft in Richtung des Pfeiles 34 verkantet und festklemmt, d.h. verklankt. Die Folge ist, daß nicht nur
der Schenkel 32 des Kettengliedes 8 ungünstig beansprucht wird, sondern daß darüberhinaus unerwünschte
Spreizbeanspruchungen auf die Schenkel des Kettenschlosses einwirken. Beides wird, wie die Figuren 15 und 16
verdeutlichen, bei den beschriebenen Kettenschlössern
mit Sicherheit verhindert.

- 10 -

Figur 15 zeigt, wie eine Verlagerung des Schenkels 33, Figur 16 wie eine Verlagerung des Schenkels 32 des Kettengliedes 8 in den lichten Innenraum 30 der Schloßhälfte 2 eines mit einem Stütz- und Verriegelungselement 6 ausgestatteten Kettenschlosses unterbunden wird, ohne daß es besonderer Hilfsmittel, z.B. in Form von Einsätzen, in den mit dem Kettenschloß verbundenen Kettengliedern bedarf.

- 11 -

Patentansprüche

1. Kettenschloß für Gliederketten mit zwei lösbar miteinander verbundenen, im wesentlichen U-förmigen Schloßhälften (1,2), die jeweils einen Innenschenkel (4) und einen Außenschenkel (3) aufweisen, wobei in der Schließstellung des Schlosses. in der die Innen- und Außenschenkel (3,4) durch Halteelemente miteinander verbunden sind und die einander zugewandten Seiten der Innenschenkel (4) sich über Ansätze und/oder ein Stütz- und Verriegelungselement (6) für die Schloßhälften (1,2) abstützen, in die lichten Innenräume des Schlosses die Gliedrundungen bildenden Enden von ovalen Kettengliedern (8) eingehängt sind, deren gerade Längsschenkel durch Anschläge (12,13) und diese miteinander verbindende Sperrflächen (17) an einer Verlagerung in die lichten Innenräume gehindert werden, dadurch gekennzeichnet, daß die Anschläge (12,13) und die Sperrflächen (17) von sich gegenüberliegenden federnden Vorsprüngen (9,10) der Ansätze und/oder des Stütz- und Verriegelungselementes (6) gebildet werden.

2. Kettenschloß nach Anspruch 1, dadurch gekennzeichnet, daß das Stütz- und Verriegelungselement (6) aus einem Bolzen (5) und den an diesem angeordneten, sich gegenüberliegenden Vorsprüngen (9,10) besteht.

3. Kettenschloß nach Anspruch 1 oder 2, dadurch gekennzeichnet, daß der Abstand (a₁,a₂) der An-

0183641

- 12 -

schläge (12,13) von einer senkrecht zur Schloßebene
durch die Schloßmitte verlaufenden Achse (A-A) ungleich groß ist.

4. Kettenschloß nach einem der Ansprüche 1 bis 3, dadurch gekennzeichnet, daß die Differenz zwischen
   dem Abstand (b) des einer senkrecht zur Schloßebene
   durch die Schloßmitte verlaufenden Achse (A-A) nächst
   gelegenen Punktes des Scheitels (14,15) der inneren
   Rundung einer jeden Schloßhälfte (1,2) und dem Abstand ($a_1$) mindestens eines Anschlages (12) von
   dieser Achse (A-A) kleiner ist als der Nenndurchmesser (d) der eingehängten Kettenglieder (8).

5: Kettenschloß nach einem der Ansprüche 1 bis 4, dadurch gekennzeichnet, daß die Vorsprünge (9,10) von
   sich gegenüberliegenden federnden Seitenwänden eines
   geschlossenen Rahmens (11) gebildet werden.

6. Kettenschloß nach Anspruch 5, dadurch gekennzeichnet, daß der Rahmen (11) durch Haltenuten (20) in
   den Stirnflächen (18,19) des Bolzens (5) gehalten
   wird.

7. Kettenschloß nach einem der Ansprüche 1 bis 4, dadurch gekennzeichnet, daß die Vorsprünge (9,10)
   von federnden Schenkeln eines im wesentlichen U-förmigen Bügels (21) gebildet werden.

8. Kettenschloß nach Anspruch 7, dadurch gekennzeichnet, daß das Joch (22) des Bügels (21) durch Schweißen mit dem Bolzen (5) verbunden ist.

9. Kettenschloß nach einem der Ansprüche 1 bis 7, dadurch gekennzeichnet, daß die Vorsprünge (9, 10) aus einem gebogenen Federstahlstreifen bestehen.

10. Kettenschloß nach einem der Ansprüche 1 bis 4, dadurch gekennzeichnet, daß die Vorsprünge (9,10) als elastische Puffer aus Gummi oder Kunststoff ausgebildet sind.

11. Kettenschloß nach Anspruch 10, dadurch gekennzeichnet, daß die elastischen Puffer Antiverklankungsstege bilden, die mit Auslegern (23) versehen sind, die in zu ihrer Verankerung dienende Ausnehmungen eines Bolzens (5) greifen.

12. Kettenschloß nach Anspruch 11, dadurch gekennzeichnet, daß die Ausnehmungen von im Abstand voneinander angeordneten Verankerungsnuten (25,26) gebildet werden.

13. Kettenschloß nach Anspruch 12, dadurch gekennzeichnet, daß die Verankerungsnuten (25,26) ringförmig ausgebildet und im Bereich der Bolzenenden angeordnet sind.

14. Kettenschloß nach Anspruch 12 oder 13, dadurch gekennzeichnet, daß die Verankerungsnuten (25, 26) hinterschnitten sind.

15. Kettenschloß nach einem der Ansprüche 11 bis 14, dadurch gekennzeichnet, daß die Vorsprünge (9, 10) haftend mit dem Bolzen (5) verbunden sind.

16. Kettenschloß nach einem der Ansprüche 10 bis 15, dadurch gekennzeichnet, daß die Vorsprünge (9, 10) durch Brücken bildende Ausleger (23) miteinander verbunden sind.

17. Kettenschloß nach einem der Ansprüche 10 bis 16, dadurch gekennzeichnet, daß der Grund einer zur Aufnahme mindestens einer Rastfeder (7) für den Bolzen (5) dienenden Haltenut (24) mit zur Beeinflussung der Federcharakteristik der Rastfeder (7) und zur Verankerung der Vorsprünge (9,10) dienenden Auslegern (23) der Vorsprünge (9,10) ausgefüllt ist.

18. Kettenschloß nach Anspruch 17 mit zwei Rastfedern, dadurch gekennzeichnet, daß die Rastfedern (7) als offene Ringe mit um $180^{o}$ zueinander versetzten, im Bereich der Vorsprünge (9,10) angeordneten Ringöffnungen ausgebildet sind.

19. Kettenschloß nach einem der Ansprüche 10 bis 18, dadurch gekennzeichnet, daß die Vorsprünge (9, 10) in der Nähe der Enden des Bolzens (5) mit Entlastungskerben (28) versehen sind.

- 15 -

20. Kettenschloß nach einem der Ansprüche 10 bis 19,
dadurch gekennzeichnet, daß die Antiverklankungsstege bildenden Vorsprünge (9,10) eine Shore-Härte
A von 40 - 90 aufweisen.

21. Kettenschloß nach einem der Ansprüche 10 bis 20,
dadurch gekennzeichnet, daß die Vorsprünge (9,10)
aus einem gießfähigen Polyurethan-Elastomer bestehen.

1/8

0183641

Fig. 2

Fig. 1

0183641

Fig. 3

Fig. 4

Fig. 5

Fig. 6

Fig. 8

Fig. 7

Fig. 10

Fig. 9

Fig. 11

Fig. 12

Fig. 13

Fig. 14

0183641

Fig. 15

Fig. 16